(19) Europäisches Patentamt

European Patent Office

Office européen des brevets

(11) **EP 0 627 779 B1**

(12) **EUROPEAN PATENT SPECIFICATION**

(45) Date of publication and mention
of the grant of the patent:
**23.09.1998 Bulletin 1998/39**

(51) Int Cl.⁶: **H01M 10/34**, H01M 4/38,
H01M 2/16

(21) Application number: **94303896.8**

(22) Date of filing: **31.05.1994**

(54) **Sealed type nickel-metal hydride alkaline storage cell and method of producing the same.**

Gasdichter alkalischer Nickel/Metallhydrid-Speicherzelle und dessen Herstellungsverfahren

Accumulateur scellé alcalin du type nickel/hydrure de métal et méthode de son préparation.

(84) Designated Contracting States:
**DE FR GB**

(30) Priority: **31.05.1993 JP 129790/93**

(43) Date of publication of application:
**07.12.1994 Bulletin 1994/49**

(73) Proprietor: **SANYO ELECTRIC Co., Ltd.**
**Moriguchi-shi, Osaka 570 (JP)**

(72) Inventors:
  • **Nakahori, Shinsuke**
    **Naruto-shi, Tokushima (JP)**
  • **Tomida, Masahito**
    **Itano-gun, Tokushima (JP)**
  • **Ueda, Takao**
    **Itano-gun, Tokushima (JP)**
  • **Hamamatsu, Takeo**
    **Itano-gun, Tokushima (JP)**
  • **Mizutaki, Fusago**
    **Itano-gun, Tokushima (JP)**
  • **Kanagawa, Ikuo**
    **Itanogun, Tokushima (JP)**

(74) Representative: **Cummings, Sean Patrick et al**
**David Keltie Associates,**
**12 New Fetter Lane**
**London EC4A 1AP (GB)**

(56) References cited:
**EP-A- 0 271 043**          **EP-A- 0 383 991**
**EP-A- 0 420 669**          **DE-A- 4 109 764**
**US-A- 5 108 851**

• **PATENT ABSTRACTS OF JAPAN vol. 15, no. 70**
  **(E-1035) 19 February 1991 & JP-A-02 291 665**
  **(MATSUSHITA ELECTRIC INDUSTRIAL CO.,**
  **LTD.) 3 December 1990**
• **JOURNAL OF ALLOYS AND COMPOUNDS,**
  **vol.206, no.1, April 1994, LAUSANNE CH pages**
  **L3 - L5 MINGMING GENG 'electrode**
  **characterisation of MmNi5-based alloys for**
  **nickel-metal hydride batteries'**
• **PATENT ABSTRACTS OF JAPAN vol. 7, no. 123**
  **(E-178) 27 May 1983 & JP-A-58 042 175 (DAINI**
  **SEIKOSHA KK) 11 March 1983**
• **PATENT ABSTRACTS OF JAPAN vol. 15, no. 367**
  **(E-1112) 17 September 1991 & JP-A-03 145 053**
  **(TOSHIBA BATTERY CO LTD) 20 June 1991**

## Description

BACKGROUND OF THE INVENTION

(1) Field of the Invention

The present invention relates to a sealed type nickel-metal hydride alkaline storage cell including a negative electrode comprised of a hydrogen-storage alloy capable of absorbing and desorbing hydrogen reversibly, particularly to an improvement of cell characteristics of the sealed type nickel-metal hydride alkaline storage cell.

(2) Description of the Related Art

Along with a development of the information-oriented society, a number of sophisticated functions are applied to portable electronic devices such as a cordless telephone, a word processor, a laptop computer, and a video camcorder. However, advantages and a further development of these portable electronic devices will not be confirmed without improving cells as the power source or backup source. Conventionally, nickel-cadmium storage cells have been commonly applied to portable electronic devices. However, to meet the recent demand of highly efficient cells, nickel-hydride cells (nickel-metal hydride alkaline cells) are becoming more popular, since they have a higher energy density, and the operation voltage is substantially same as that applied to nickel-cadmium storage cells. However, the conventional sealed type nickel-hydride cells have the drawbacks in that they do not work well under unfavorable temperature conditions, also the cells are forced to be unworkable by a cell safety vent operated if they are charged continuously under an unfavorable condition for a long time.

The drawbacks of the convention sealed type nickelhydride alkaline cells will be described hereinbelow. First of all, the nickel-hydride cells must be sealed to be applied to portable electronic devices; however, in order to seal the cells, the capacity of the cell must be governed by the positive electrode. The reason for this is stated now.

During the continuous charge, the positive electrode is fully charged first, since its capacity is smaller than the capacity of the negative electrode. If the cell continues to be charged even after this, the positive electrode will be over-charged, and oxygen gas is generated from the positive electrode [Equation (1)]. The oxygen gas moves from the positive electrode to the negative electrode through a separator, and generates water when it is reacted with the hydrogen included in the hydrogen absorbing alloy, which has some parts uncharged [Equation (2)]. The generated water is consumed by the negative electrode according to its usual charge reaction [Equation (3)]; therefore, the oxygen generated from the positive electrode will not be accumulated inside the cell. Further, since the capacity of the negative electrode is larger than the capacity of the positive electrode, the charge of the negative electrode is not completed even when the positive electrode is fully charged, so that the negative electrode does not generate hydrogen gas. Thus, by making a charge reserve (uncharged part) in the negative electrode, the oxygen gas generated from the positive electrode is consumed by the negative electrode, so that no hydrogen gas is generated from the negative electrode. As a result, no hydrogen gas nor oxygen gas is accumulated inside the cell, and the sealing of the cell becomes possible.

$$4OH^- \rightarrow 2H_2O + O_2 + 4e^- \qquad (1)$$

$$4MH + O_2 \rightarrow 4M + 2H_2O \qquad (2)$$

$$M + H_2O + e^- \rightarrow MH + OH^- \qquad (3)$$

However, even when a sufficient charge reserve (uncharged part) is prepared, the hydrogen absorbing ability of the hydrogen absorbing alloy largely relies on the temperature and pressure. Also, if the cell is used in unfavorable environments (charge current, cell temperature etc.), side reactions other than the inherent electrochemical reactions occur; thus, the cell efficiency is badly decreased in unfavorable using environments, and sometimes the cell becomes unworkable. This is explained in detail hereunder.

(1) When a cell is charged continuously in high temperature for a long time, the hydrogen absorbing alloy is oxidized by a part of the oxygen generated from the positive electrode, which therefore the hydrogen absorbing ability of the hydrogen absorbing alloy is decreased. Also, this oxygen is reacted with the resolving organic substances derived from the separator material, so that the oxygen relative to Equation (2) is decreased; accordingly, the charge reserve is shrunken. As a result, the difference in capacity between the positive electrode and the negative electrode is reduced, and the negative electrode is fully charged, so that hydrogen gas is generated from the negative electrode. The generated hydrogen gas is accumulated inside the cell, and it raises the internal pressure of the cell, as a result of which the cell safety vent starts to disperse cell components such as electrolyte to outside the cell together with the gas. When this happens, the shortage of electrolyte occurs; irreversibly the cell efficiency is decreased. Also, the electrolyte dispersed outside may corrode cell storage components of electronic devices.

(2) While β-NiOOH is generated during the usual charge, nickel active materials in the positive electrode are likely oxidized during the charge in low temperature for a long time, whereby higher order $\gamma$-NiOOH is easily generated. The generated $\gamma$-NiOOH takes the electrolyte in its crystal layers. Accordingly, the separator loses the electrolyte which is required for a discharge reaction (dry-out of the separator), and the discharge efficiency of the cell is decreased temporarily. This decrease of the discharge efficiency is not irreversible, different from the above (1), since electrolyte returns to the separator again when $\gamma$-NiOOH is reduced for instance into $Ni(OH)_2$ at the discharge reaction. Nevertheless, in low temperature the efficiency of the hydrogen absorbing alloy may be deteriorated, and the amount of the oxygen gas consumed by the negative electrode may become smaller than the amount of oxygen gas generated from the positive electrode. In this case, the unconsumed oxygen gas is accumulated inside the cell, so that the cell safety vent starts to operate. Thus, in low temperature the cell efficiency may be decreased irreversibly due to the operation of the cell safety vent.

Various solutions to the above problems have been proposed. For example, United States Patent No. 4,636,445 and Japanese Laid-open Patent Application No. 61-99277 determine the amount of the alkaline electrolyte in accordance with the theory capacity of the negative electrode; while the United States Patent No. 5,132,177 includes lithium hydroxide and sodium hydroxide in the alkaline electrolyte.

These proposed solutions, however, are not sufficient to overcome the above problems. That is, a sealed type nickelmetal hydride alkaline storage cell which is workable in a wide range of temperatures from low to high has not been provided so far. In this regard, conventionally electronic devices to which the nickel-metal hydride cells can be applicable are limited.

Other prior art documents include:-

EP-A-271 043 is concerned with sealed storage batteries having a high capacitance and a long lifetime using a hydrogen-occlusion-alloy as a negative electrode. In order to suppress self-discharge of the cell, use of a sulfonated polypropylene separator is disclosed.

JP-A-58042175 discloses a non-aqueous electrolyte cell using a non-aqueous electrolyte and a lithium negative electrode. By balancing the amount of active mass and the amount of electrolyte improvement in the discharge characteristic during the last period of electric discharge is claimed.

EP-A-420 669 describes a nickel-metal hydride secondary cell having a hydrogen absorbing alloy negative electrode containing spherical hydrogen absorbing alloy particles having an average particle diameter of 1 to 100$\mu$ and an average crystal grain diameter of 10$\mu$ formed by rapid cooling techniques. Use of such a negative electrode is said to provide benefits in terms of cell capacity and a long lifetime in terms of the number of charging/discharging cycles.

## SUMMARY OF THE INVENTION

Accordingly, it is an object of the present invention to provide a nickel-metal hydride storage cell which is superior in charge discharge characteristics by preventing the decrease of the cell efficiency during the continuous charge or trickle charge.

The above object may be fulfilled by a sealed type nickel-metal hydride alkaline storage cell which shows the following six features.

(1) The sealed nickel-metal hydride alkaline storage cell comprises a positive electrode which includes nickel active material as a main component, and also includes at least one element selected from a group consisting of zinc and cadmium; a negative electrode mainly comprising hydrogen absorbing alloy; electrolyte comprising alkaline solution; and a separator which is mainly made of non-woven polyolefin resin fabric or non-woven polysulfone resin fabric and holds the electrolyte, wherein the thickness and weight per unit of the separator are 0.15-0.22mm and 60-85g/m$^2$ respectively and the amount of electrolyte held in the separator is represented by $0.3 \leq X/(X+Y) \leq 0.5$, in which X is the weight of the electrolyte held in the separator while Y is the weight of the separator material.

Expressed in another way, the invention resides in a method of producing a sealed type nickel-metal hydride alkaline storage cell comprising a positive electrode which includes nickel active material as a main component, and also includes at least one element selected from a group consisting of zinc and cadmium; a negative electrode mainly comprising hydrogen absorbing alloy; an electrolyte comprising alkaline solution; and a separator having a thickness and weight per unit of 0.15-0.22mm and 60-85g/m$^2$ respectively which is mainly made of one of non-woven polyolefin resin fabric and non-woven polysulfone resin fabric, the method comprising the steps of: obtaining weight of the separator Y; and obtaining weight of electrolyte preferably held in the positive and negative electrodes, Z, and further comprising the sub-step of pouring weight of electrolyte, W, into the cell, wherein W is expressed by

$$W = \frac{Y}{1/K - 1} + Z$$

and

$0.3 \leq K \leq 0.5$.

In this construction and method, the positive electrode includes at least one of zinc and cadmium, and this suppresses the high ordering of the nickel active material. Accordingly, the shortage of electrolyte (dry-out of the separator) which used to be caused due to the take-in of the electrolyte among the crystal layers of the high order nickel active material can be prevented.

Also, the separator is made of non-woven fabric of polyolefin resin or polysulfone resin, so that the generation of hydrogen gas from the negative electrode can be prevented. That is, both of the non-woven fabrics of polyolefin resin and polysulfone resin are superior in the resistance to resolution and oxidation; and their electrolyte holding ability and gas permeability are hardly deteriorated along with a lapse of time. Because of these favorable characteristics, the separator operates favorably in a long time period, and the oxygen gas generated from the positive electrode during the continuous charge moves to the negative electrode smoothly. Further, since these non-woven fabrics are not deteriorated, the resolving organic substances are hardly generated. On the other hand, the conventional cell incudes non-woven fabric of polyamide resin or the like as the separator material, and the resolving organic substances of the separator material are electrochemically oxidized at the surface of the positive electrode, otherwise the resolving organic substances are reacted with the oxygen generated from the positive electrode. Thus, the charge reserve in the negative electrode is not shrunken in the present invention.

Also, the relation between the weight X of the electrolyte held in the separator and the weight Y of the separator material is $0.3 \leq X/(X+Y) \leq 0.5$. Accordingly, the dry-out of the separator hardly occurs, and the separator sustains a favorable gas permeability.

Thus, according to the above construction, the decrease of the cell efficiency during the continuous charge or trickle charge can be prevented in a wide range of temperatures, from low to high.

(2) In the sealed type nickel-metal hydride alkaline storage cell, the hydrogen absorbing alloy constituting the negative electrode may comprise mischmetal being a rare earth element mixture, as well as nickel and cobalt, and a crystal of the hydrogen absorbing alloy may have a $CaCu_5$ structure.

In this construction (2), the negative electrode hydrogen absorbing alloy crystal includes nickel, cobalt, and mischmetal which is a mixture of rare-earth element, and the crystal has a $CaCu_5$ structure. Thus constructed alloy is superior in the hydrogen absorbing ability and resistance to oxidation, so that this construction (2) facilitates the effects of the construction (1), that is the decrease of cell efficiency during the continuous charge and trickle charge can be prevented.

(3) In the sealed type nickel-metal hydride alkaline storage cell, the mischmetal may include neodymium which is 20-50 weight% of the total weight of the mischmetal.

In this construction (3), the content of neodymium is 20-50 weight% of the mischmetal constituting the negative electrode hydrogen absorbing alloy, so that the negative electrode hydrogen absorbing alloy has superior anticorrosion characteristics. Accordingly, both the decrease of hydrogen absorbing ability, which would be caused by the corrosion of the alloy, and the shrinking of the charge reserve, which would be caused by the oxidation of the alloy, can be prevented. As a result, the generation of hydrogen gas due to the overcharge of the negative electrode does not occur. Thus, according to the construction (3), the hydrogen absorbing alloy constituting the negative electrode is hardly oxidized, so that the decrease of the capacity of the negative electrode during the continuous charge or trickle charge is prevented. As a result, the decrease of the cell efficiency, especially the generation of hydrogen gas from the negative electrode because of the negative electrode governing, can be prevented.

(4) In the sealed type nickel-metal hydride alkaline storage cell, an atomic ratio of the cobalt to the mischmetal may be 0.5-1.2:1.

In this construction (4), the negative electrode hydrogen absorbing alloy comprises mischmetal, nickel, and cobalt, and the atomic ratio of cobalt to mischmetal is 0.5-1.2:1. Thus constructed hydrogen absorbing alloy shows a superior anticorrosion, so that the decrease of the hydrogen absorbing ability due to the corrosion of the alloy and the shrinking of the charge reserve due to the oxidation of the alloy itself can be prevented. As a result, the generation of hydrogen gas which would be caused by the overcharge of the negative electrode can also be prevented.

Thus, being similar to the construction (3), the decrease of the cell efficiency during the continuous charge or trickle charge, especially the generation of hydrogen gas from the negative electrode because of the governing of the negative electrode can be prevented.

(5) In the sealed type nickel-metal hydride alkaline storage cell, a dendrite cell size of a crystal particle constituting the hydrogen absorbing alloy may be 10μm or smaller.

In this construction (5), the dendrite cell size of the crystal particle of the negative electrode hydrogen absorbing alloy is 10μm or less, so that a uniform alloy structure is realized, and the anticorrosion is improved. If this construction (5) is employed together with the construction (1), the deterioration of the hydrogen absorbing ability due to the corrosion of the hydrogen absorbing alloy, and the shrinking of the charge reserve due to the oxidization of the alloy itself can be prevented. Therefore, even when being charged continuously for a long time, the negative electrode is not charged fully, and the generation of hydrogen gas from the negative electrode can be prevented.

The dendrite size is explained hereunder. In a branch-like metal structure which appears on coagulation of a molten alloy, the main axis is a primary branch growing from the core, and a secondary branch grows perpendicular to the primary branch (main axis). The dendrite size indicates the thickness of this secondary branch, and generally, the larger the dendrite size is, the less uniform the alloy structure is.

(6) In the sealed type nickel-metal hydride alkaline storage cell, the hydrogen absorbing alloy may be obtained by cooling its molten liquid at $1 \times 10^{3\circ}$C/s or faster.

In this construction (6), the negative electrode hydrogen absorbing alloy is obtained by quickly cooling the molten alloy at $1 \times 10^{3\circ}$C/s or faster. The alloy structure of the hydrogen absorbing alloy thus obtained is uniform, so that the substantially same effects as those in the construction (5) are accomplished herein.

BRIEF DESCRIPTION OF THE DRAWINGS

FIG. 1 is a sectional view of a cylindrical sealed type nickel-metal hydride cell according to a first embodiment of the present invention;
FIG. 2 shows discharge characteristics of the cell at a first cycle of the continuous charge in low temperature;
FIG. 3 shows discharge characteristics of the cell at an eighth cycle of the continuous charge in high temperature;
FIG. 4 is a sectional view of a nickel-metal hydride cell according to another embodiment;
FIG. 5 is a sectional view of a nickel-metal hydride cell according to still another embodiment; and

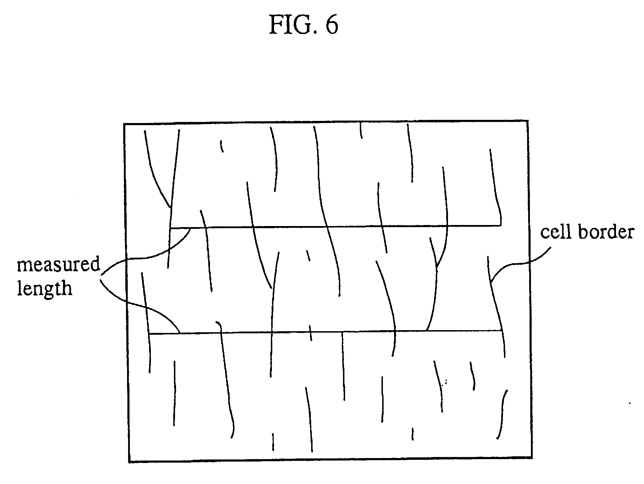

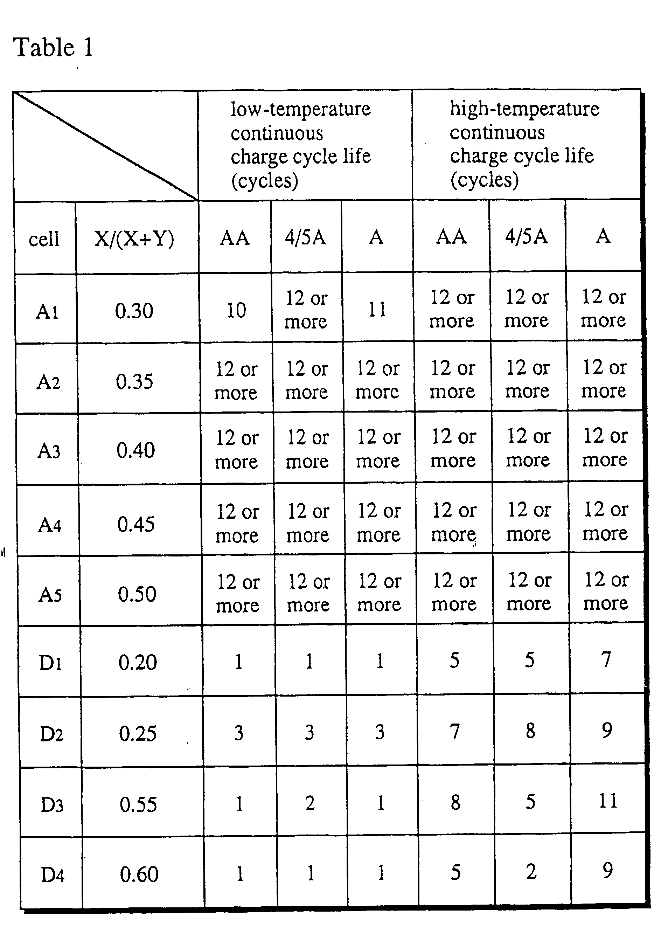

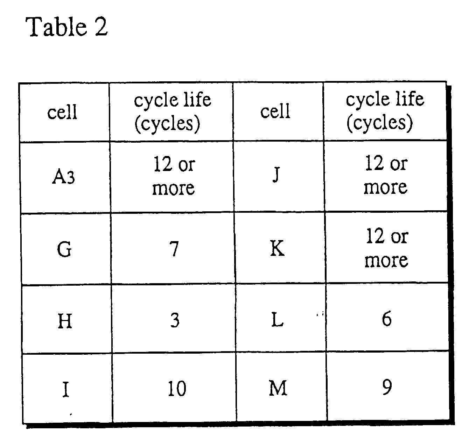

FIG. 6 indicates the dendrite cell size.

DESCRIPTION OF THE PREFERRED EMBODIMENTS

[Embodiments]

The present invention will be described in Embodiments 1-3, and Comparative examples 1-6.

(Embodiment 1)

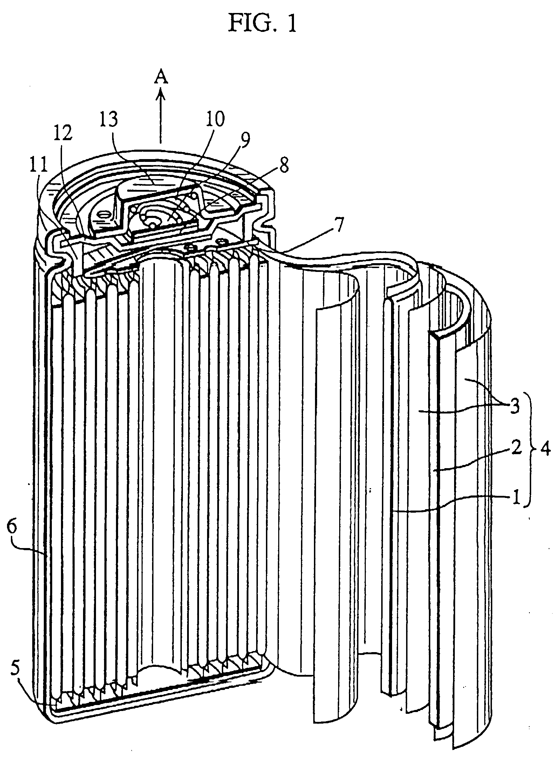

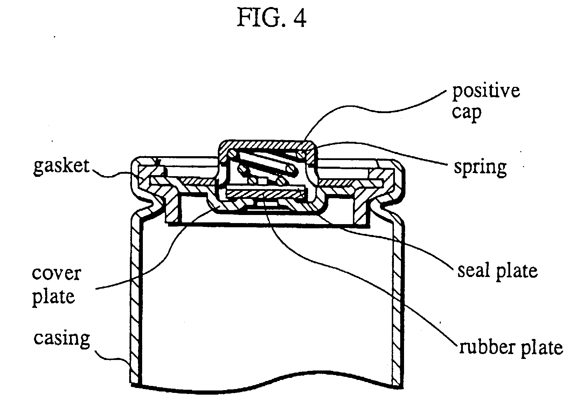

The overall configuration of a cell in the present invention will be described as referring to FIG. 1 and FIG. 4. FIG. 1 is a sectional view of a cylindrical sealed type nickelmetal hydride alkaline storage cell as an example of the present invention. The configuration of this cell is described. An electrode group 4 comprising a positive electrode 1 made of nickel active material, a negative electrode 2 including hydrogen absorbing alloy powder, and a separator 3 interposed between these positive electrode 1 and negative electrode 2 are wound together as a coil, and is housed in a casing 6. The negative electrode 2 is electrically connected to the bottom of the casing 6 by a negative electrode collector 5.

At the top of the casing 6, a cover plate 12 having an opening in its center is constructed via a gasket 11, and a positive cap 13 is provided to the cover plate 12. A rubber plate 8 and a seal plate 9 are disposed on this cover plate 12, and this seal plate 9 is pressed with a coil spring 10. The positive cap 13 and the positive electrode plate 1 are connected to each other via a positive electrode collector 7 and the cover plate 12. When the internal pressure of the cell is increased, the rubber plate 8, the seal plate 9, and the coil spring 10 are pressed along with the A direction shown in the figure, so that a space is formed in the rubber plate 8 to release gas into air.

The cylindrical sealed type nickel-metal hydride cell thus constructed was produced according to the following method.

(production of positive electrode)

Combined solution of 5 mol% of zinc sulfate and 1.5 mol% of cobalt sulfate, and sodium hydroxide solution were gradually added to nickel sulfate while adjusting its pH with aqueous ammonia. Accordingly, nickel hydroxide powder was deposited.

Then, cobalt oxide being 10 part by weight and hydroxypropylcellulose being 0.1 part by weight were added to the above nickel hydroxide powder being 90 part by weight, then approximate amount of water was mixed with them. Thus, active material paste was generated. A foamed nickel porous matrix (thickness=about 1.6mm) was filled with this active material paste, then the foamed nickel porous matrix was dried and pressed, as a result of which a nickel electrode which was about 0.6mm in thickness was generated.

(production of negative electrode)

Mischmetal (Mm: rare earth element mixture including about 20 weight% of neodymium), nickel, cobalt, aluminum, and manganese (manganese on the market whose purity is 99.9%, except Mm) were measured and mixed in the atomic ratio of 1: 3.6: 0.6: 0.2: 0.6 respectively. This alloy mixture was molten by induction heating in a high frequency induction furnace of argon gas atmosphere; the molten alloy was cooled at a cool rate of $1 \times 10^3$ °C/s according to the roll method so that the dendrite cell size of its crystal was 10μm or less. As a result, a hydrogen absorbing alloy ingot represented by $Mm_{1.0}Ni_{3.6}Co_{0.6}Al_{0.2}Mn_{0.6}$ was produced.

The hydrogen absorbing alloy ingot was mechanically pulverized into hydrogen absorbing alloy powder of 100μm in average particle diameter. The dendrite cell size of the hydrogen absorbing crystal particle was about $8\mu m$.

This hydrogen absorbing alloy powder being 100 part by weight, polyethylene oxide being 0.5 part by weight, polyvinyl pyrrolidone being 0.5 part by weight, and polytetrafluoroethylene being 2 part by weight were kneaded with appropriate amount of water; as a result, hydrogen absorbing alloy paste was generated. The hydrogen absorbing alloy paste thus produced was pasted on a punched metal collector, accordingly a negative electrode comprising the hydrogen absorbing alloy and being 0.4mm in thickness was produced.

It was confirmed through the X-ray diffraction method that the crystal of the hydrogen absorbing alloy had a $CaCu_5$ structure. This measurement of the dendrite cell size is described now. In a Mm-Ni hydrogen absorbing alloy ingot, a second branch of the coagulation structure did not grow sufficiently, as a result it coagulated like a cell. Accordingly, a line was drawn perpendicularly to the growing direction of the crystal, and the line length (L) was measured, also the number of cell borders (N) crossing the line was counted. An average length (L/N) between the cell boarders was calculated from the above data, and the calculated average length was regarded as the dendrite cell size.

(fabrication of cell)

In JIS standards of nickel-cadmium storage cell, AA, 4/5A, and A sizes of sealed type nickel-metal hydride alkaline storage cells were generated as follows.

The nickel positive electrode, the hydrogen absorbing alloy negative electrode, and separator material mainly made of non-woven olefin resin fabric were cut according to each cell size. Then, for each cell size, the positive electrode and the negative electrode were rolled via the separator material, and they were inserted into the respective size of casing.

Next, alkaline electrolyte was generated by combining potassium hydroxide, sodium hydroxide, and lithium hydroxide in the ratio of 7: 1: 2 by mol while the total concentration of these components was about 7 mol/l.

The alkaline electrolyte thus generated was poured into each JIS size cell so that the weight X of the electrolyte held in the separator and the weight Y of the separator material was $X/(X+Y)=K$ (K=0.30, 0.35, 0.40, 0.45, 0.50). After pouring the electrolyte, each cell was sealed with a sealing means including the positive cap and the safety vent whose working pressures was about $15kgf/cm^2$. Accordingly, the sealed type nickel-metal hydride alkaline cell as shown in FIG. 1 was generated, and the activation treatment which was a charge discharge operation was applied to each cell. Thus, different sizes of cells, $A_1$-$A_5$ were generated.

The electrolyte to be poured was measured to satisfy one of the above five relations, and this will be described now. It was known from experiences that the weight X of the electrolyte held in the separator could be obtained by subtracting the weight of the electrolyte preferably held in the positive and negative electrodes from the weight of the poured electrolyte. Basing upon this knowledge, the weight of the electrolyte to be poured was calculated as follows.

It was assumed that the weight of the electrolyte to be poured was W, the weight of the electrolyte to be preferably held in the positive and negative electrodes was Z, and the weight of the dried separator which had been measured beforehand was V. In this case, the electrolyte X to be held in the separator was $X=W-Z \ldots$ (1). It was required that the weight X of the electrolyte and the weight Y of the separator material would meet the relational expression of $X/(X+Y)=K \ldots$ (2), and K was one of 0.30, 0.35, 0.40, 0.45, and 0.50. The expression (2) was changed into

$$X = \frac{Y}{\frac{1}{K} - 1};$$

by substituting this into the expression (1),

$$W = \frac{Y}{\frac{1}{K} - 1} + Z \qquad (3)$$

was obtained.

It is apparent from the above equations that X varies depending on the sort of the separator, the weight Z of the electrolyte preferably held in the positive and negative electrodes, and the weight W of the electrolyte to be poured. Also, K must be one of the five values. Also, Z and Y are constant as long as the same sort and size of the electrode and cell are applied. Further, Y=V. Thus, by calculating beforehand the weight Z of the electrolyte to be preferably held in the positive and negative electrodes and the weight V (Y) of the separator material as well as substituting these values into Expression (3), the weight W of the electrolyte to be poured was detected. Therefore, by pouring the electrolyte W calculated from Expression (3) into each cell, the 5 cells were produced for each cell size where the ratios between the weight X of the electrolyte held in the separator and the weight Y of the separator material were the above five values. All sizes of cells (JIS: AA, 4/5A, A) are represented as follows according to the relation between the weight X of the electrolyte held in the separator and the weight Y of the separator material:

$(A_1)$; $X/(X+Y) = 0.30$
$(A_2)$; $X/(X+Y) = 0.35$
$(A_3)$; $X/(X+Y) = 0.40$
$(A_4)$; $X/(X+Y) = 0.45$
$(A_5)$; $X/(X+Y) = 0.50$

The thickness and weight per unit of the employing separator were 0.15-0.22mm, and 60-85 $g/m^2$ respec-

tively. The cell capacity was designed to be 1000 mAH for AA size, 1400 mAh for 4/5 A size, and 1700 mAH for A size.

The K value for the fabricated cell was obtained after defabricating the cell by subtracting the weight V of the washed and dried separator (the weight Y of the separator material) from the weight (X+Y) of the separator containing the electrolyte.

[Embodiment 2]

An AA size sealed type nickel-metal hydride alkaline cell (B) was produced substantially same as the first embodiment except that 5 mol% of cadmium sulfate was included in the positive electrode active material instead of zinc sulfate, and the weight X of the electrolyte held in the separator and the weight Y of the separator material was X/(X+Y)=0.40.

[Embodiment 3]

An AA size sealed type nickel-metal hydride alkaline cell (E) was produced substantially same as the first embodiment except that the separator was made of non-woven fabric of polysulfone, and the weight X of the electrolyte held in the separator and the weight Y of the separator material was X/(X+Y)=0.40.

[Embodiment 4]

An AA size sealed type nickel-metal hydride alkaline cell (J) was produced substantially same as the first embodiment except that the atomic ratio of cobalt to misch metal was 1.0 : 1, that is the composition expression of the alloy was $Mm_{1.0}Ni_{3.2}Co_{1.0}Al_{0.2}Mn_{0.6}$; and the weight X of the electrolyte held in the separator and the weight Y of the separator material was X/(X+Y)=0.40.

[Embodiment 5]

An AA size sealed type nickel-metal hydride alkaline cell (K) was produced substantially same as the first embodiment except that the content of neodymium in the mischmetal was set to be 50 weight% in the fabrication of the hydrogen absorbing alloy negative electrode, as well as the weight X of the electrolyte held in the separator and the weight Y of the separator material was X/(X+Y)=0.40.

[Comparative example 1]

An AA size sealed type nickel-metal hydride alkaline cell (C) was produced substantially same as the first embodiment except that no zinc sulfate was added to nickel sulfate in the positive electrode, and the weight X of the electrolyte held in the separator and the weight Y of the separator material was X/(X+Y)=0.40.

[Comparative example 2]

Four sorts of AA size sealed type nickel-metal hydride alkaline cells ($D_1$-$D_4$) were produced substantially same as the first embodiment except that the K values representing the relation between the weight X of the electrolyte held in the separator and the weight Y of the separator material (X/(X+Y)) were 0.20, 0.25, 0.55, 0.66.

[Comparative example 3]

An AA size sealed type nickel-metal hydride alkaline cell (F) was produced substantially same as the first embodiment except that non-woven fabric of polyamide resin was included as the separator material, and the weight X of the electrolyte held in the separator and the weight Y of the separator material was X/(X+Y)=0.40; accordingly the produced cell was substantially same as the third embodiment except for the separator material.

[Comparative example 4]

An AA size sealed type nickel-metal hydride alkaline cell (G) was produced substantially same as the first embodiment except that the content of neodymium in the mischmetal was set to be 10 weight% in the fabrication of the hydrogen absorbing negative alloy, as well as the weight X of the electrolyte held in the separator and the weight Y of the separator material was X/(X+Y) =0.40.

[Comparative example 5]

An AA size sealed type nickel-metal hydride alkaline cell (H) was produced substantially same as the first embodiment except that the atomic ratio of cobalt to mischmetal in the hydrogen absorbing alloy was 0.4 : 1, that is the composition expression of the alloy was $Mm_{1.0}Ni_{3.8}Co_{0.4}Al_{0.2}Mn_{0.6}$; and the weight X of the electrolyte held in the separator and the weight Y of the separator material was X/(X+Y)=0.40.

[Comparative example 6]

An AA size sealed type nickel-metal hydride alkaline cell (I) was produced substantially same as the first embodiment except that when cooling the molten metal, it was flown into a mold at the rate of about $1 \times 10^{2}$°C/s, accordingly the dendrite cell size of each alloy crystal was about 10 μm or more, as well as the weight X of the electrolyte held in the separator and the weight Y of the separator material was X/(X+Y)=0.40.

More precisely, the dendrite cell size of the alloy crystal herein was about 15 μm.

[Comparative example 7]

An AA size sealed type nickel-metal hydride alkaline cell (L) was produced substantially same as the first embodiment except that the atomic ratio of cobalt to mischmetal in the hydrogen absorbing alloy was 1.3 : 1, that is the composition expression of the alloy was $Mm_{1.0}Ni_{2.9}Co_{1.3}Al_{0.2}Mn_{0.6}$, as well as the weight X of the electrolyte held in the separator and the weight Y of the separator material was X/(X+Y)=0.40.

[Comparative example 8]

An AA size sealed type nickel-metal hydride alkaline cell (M) was produced substantially same as the first embodiment except that the content of neodymium in mischmetal was set to be 60 weight% in the fabrication of the negative electrode hydrogen absorbing alloy, and the weight X of the electrolyte held in the separator and the weight Y of the separator material was X/(X+Y) =0.40.

[EXPERIMENT]

In each of the cells produced according to the present invention and the cells produced according to the comparative examples, cell characteristics during the continuous charge in low temperature and high temperature were examined. The experiment was conducted under the following conditions.

(continuous charge in low temperature)

After charging each cell at 0.1C in 0°C for a month, it was returned to the room temperature, and was discharged with current of 1C until it became 1.0V. This charge/discharge cycle was applied to each cell. A cell life was defined when the cell capacity became 50% of a certain capacity, and each cell's cell capacity was determined according to its cell life.

(continuous charge in high temperature)

After charging each cell at 0.1C in 40°C for a month, it was returned to the room temperature, and was discharged with current of 1C until it became 1.0V. This charge/discharge cycle was applied to each cell. A cell life was defined when the cell capacity became 50% of a certain capacity, and each cell's cell capacity was determined according to its cell life.

The current of 1000mAH, 1400mAH, and 1700mAH correspond to 1C for AA, 4/5A, and A cells respectively.

[Results]

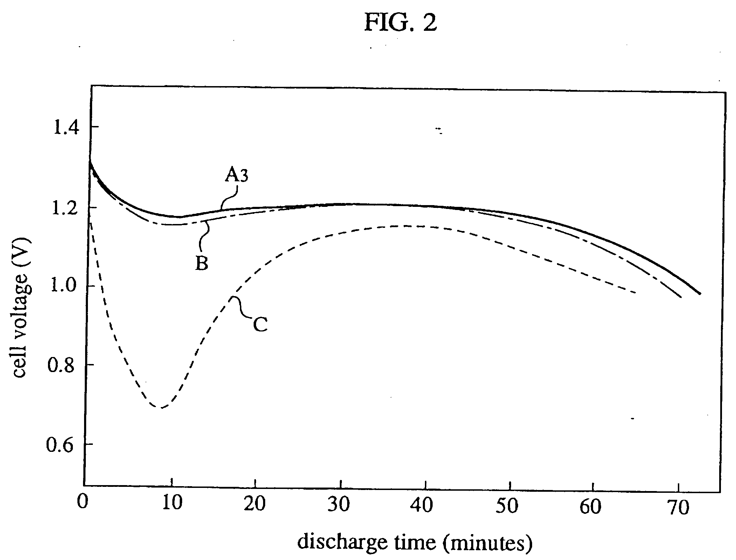

1) FIG. 2 shows discharge characteristics of the cells ($A_3$) and (B) in the present invention as well as the cell (C) in the comparative example at a first cycle of the continuous charge test in low temperature. The same size and K value were applied to these cells.

As shown in FIG. 2, the cell voltage of the cell (C) excluding zinc or cadmium dropped to 1.0V or lower immediately after the discharge started, and was recovered to 1.0V or higher along with the continuation of discharge. In contrast, the cell ($A_3$) which included zinc and the cell (B) which included cadmium according to the present invention did not have a rapid decrease in their cell voltage, and showed favorable discharge characteristics in low temperature. The same characteristics shown in FIG. 2 were observed at the second cycle and after, although not illustrated.

Thus, at the initial discharge stage, the rapid decrease of the cell voltage was observed in the cells which included neither zinc nor cadmium. The believed cause for this was that the nickel active material in the positive electrode became $\gamma$-NiOOH when the cell was charged in low temperature; accordingly the electrolyte was taken into the crystal layers of $\gamma$-NiOOH, so that a so-called dry-out of the separator occurred. This led a shortage of the electrolyte required for a further charge. Also, it was found that the cell voltage recovered later. The believed cause for this recovery was that $\gamma$-NiOOH was reduced into its original form as the discharge progressed, and the dry-out of the separator was improved by that. In contrast, the cells ($A_3$) and (B) had the effective discharge characteristics without a rapid decrease. The believed cause for this was that the cells ($A_3$) and (B) included either zinc or cadmium according to the present invention, and they prevented the high ordering of the active material in the positive electrode effectively, as a result the dry-out of the separator was prevented.

It was proved from the above findings that by adding zinc or cadmium to the positive electrode, the dry-out of the separator was suppressed, accordingly the deterioration of the discharge characteristics of the cell was prevented favorably.

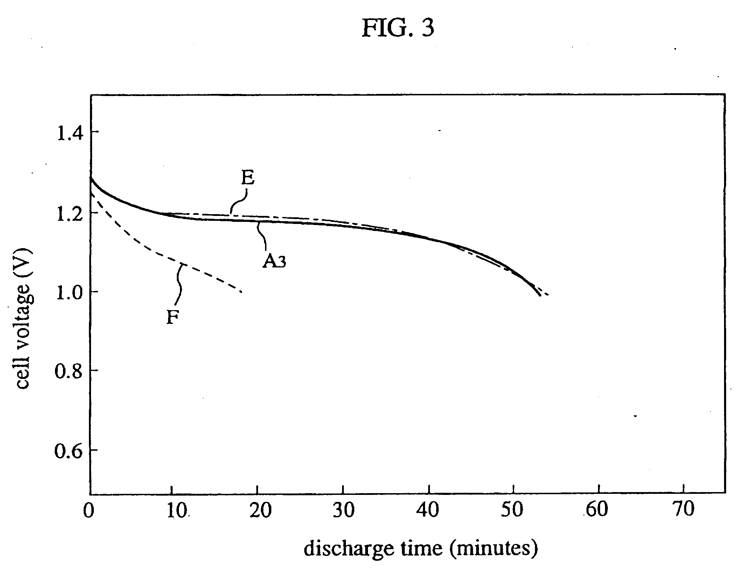

2) FIG. 3 shows discharge characteristics of the AA size cells ($A_3$) and (E) in the present invention and the cell (F) in the comparative example at a eighth cycle of the continuous charge test in high temperature. Similarly to FIG. 2, the same cell size and K value were applied to every cell.

As shown in FIG. 3, the cells ($A_3$) and (E) where the separators were made of polyolefin resin and polysulfone resin respectively showed favorable discharge characteristics after continuous charge in high temperature. In contrast, the cell (F) in the comparative example where the separator was made of polyamide resin fabric had a rapid decrease in the cell voltage immediately after the discharge test started.

The believed cause for the above results was that in the cell (F) the polyamide resin fabric was damaged by the electrolyte when the cell was charged in high temperature, and resolving organic substances were generated. The resolving organic substances were reacted with the oxygen generated from the positive electrode, and hence a part of the oxygen to be moved to the negative electrode was consumed. As a result, the charge reserve was shrunk, whereby hydrogen gas was generated from the negative electrode; otherwise, the electrolyte was carbonated, so that its alkali concentration was lowered. Irreversibly, the characteristics of the cell were deteriorated. In contrast, in the cells $(A_3)$ and (E) polyolefin resin fabric and polysulfone resin fabric were employed as the separator material respectively, and these fabrics were superior in the resistance to oxidation and resolution. Therefore, the above damage to the separator did not occur in these cells and the discharge characteristics remained favorable after continuous charge in high temperature. From these results, it was proved that the deterioration of the cell characteristics during the continuous charge in high temperature was prevented favorably by including polyolefin resin fabric or polysulfone resin fabric as the separator material.

3) Table 1 shows cycle lives of AA, 4/5 A, A sizes of cells $(A_1)$-$(A_5)$ in the present invention and $(D_1)$-$(D_4)$ in the comparative examples after charging the cell continuously in low temperature and high temperature. The cells in the present invention (As) and the cells in the comparative examples (Ds) were the same as each other except their K values.

As shown in Table 1, every size of the cells $(A_1)$-$(A_5)$ had a favorable cell life such as 10-12 times. To be noted, in the cells $(A_1)$-$(A_5)$ zinc was included in the positive electrode, polyolefin resin fabric was included as the separator material, and the electrolyte was poured to satisfy $0.3 \leq X/(X+Y) \leq 0.5$ between the weight X of the electrolyte held in the separator and the weight Y of the separator material. On the other hand, the cells $(D_1)$, $(D_2)$ and $(D_3)$, $(D_4)$ had significantly shorter cycle lives than the cells $(A_1)$-$(A_5)$. In the cells $(D_1)$ and $(D_2)$, the K value was smaller than 0.3 while in the cells $(D_3)$ and $(D_4)$ the K value was greater than 0.5.

The believed cause for this result was that when charging in low temperature, the take-in of the electrolyte caused by the high-ordering of the active material (generation of $\gamma$-NiOOH) effected more largely if the K value was smaller than 0.3. Also, when charging in high temperature, the carbonation of the electrolyte due to the resolution of organic substances in the separator effected more largely if the K value was smaller than 0.3. In both cases, the cell capacity was deteriorated, and the cycle life was shortened. When the K value was greater than 0.5, on the other hand, the electrolyte excessively held in the separator reduced the gas permeability of the separator; accordingly, the transmission of the oxygen and hydrogen generated from the positive electrode and negative electrode respectively was hindered. As a result, the consumption reaction of the gas was not held smoothly; the unconsumed gas was accumulated in the cell gradually; and finally the cell safety vent was forced -to operate to disperse the electrolyte to outside the cell together with the gas. Accordingly, the shortage of electrolyte occurred, and the cycle life was shortened like the cells having small K values, although differing in the cause.

From the above results, it was confirmed that the cycle life of the cell improved significantly even when the cell was charged in low temperature or high temperature as long as the relation between the weight X of the electrolyte held in the separator and the weight Y of the separator material satisfied the expression of $[0.3 \leq X/(X+Y) \leq 0.5]$, regardless of the dimension of the electrode and separator, and the absolute weight of the electrolyte to be poured.

4) Table 2 shows cycle lives of the cells $(A_3)$, (J), and (K) in the present invention and the cells (G), (H), (I), (L), and (M) in the comparative examples when the cells are charged continuously in high temperature. These cells had the same cell size (JIS standard: AA) and the same K value (0.4). The dendrite cell size of the cells $(A_3)$, (G), (H), (J), (K), (L), and (M) was about 8μm, and the dendrite cell size of the cell (I) was about 15μm.

As shown in Table 2, the cycle lives of the cells in the comparative examples were shorter than those of the cells $(A_3)$, (J), and (K) in the present invention. In the cell (G) the content of neodymium in mischmetal was 10 weight%; in the cell (M) the content of neodymium in mischmetal was 60 weight%; in the cell (H) the atomic ratio of cobalt to mischmetal was 0.4:1; in the cell (L) the atomic ratio of cobalt to mischmetal was 1.3:1; and the cell (I) was the same as the cell $(A_3)$ in the present invention except for the dendrite cell size (10μm or more).

The believed cause for the above results was that the resistance to oxidation was decreased when content of neodymium in mischmetal or the content of cobalt determined stoichiometrically was less than that in the present invention, or the dendrite cell size of the hydrogen absorbing alloy exceeded that in the present invention. Because of the decrease in the resistance to oxidation, the hydrogen absorbing alloy in the comparative examples was gradually degraded during the continuous charge, as well as the charge reserve was reduced, so that the safety vent was forced to operate by the hydrogen gas accumulated inside the cell, accordingly a shortage of electrolyte occurred.

When the content of neodymium in the negative electrode hydrogen absorbing alloy, and the content of cobalt determined stoichiometrically exceeded those in the present invention, the capacity of the negative electrode was decreased significantly although the hydrogen absorbing alloy's resistance to oxidation was improved. As a result, it was difficult to keep a sufficient charge reserve since the ratio of the positive electrode capacity to the negative electrode capacity in the initial stage was small, although the shrinking of the charge reserve due to the deterioration of the hydrogen absorbing alloy could be minimized. Accordingly, the safety vent was forced to operate by the hydrogen gas accumulated inside the cell, and a shortage of electrolyte occurred.

From these results, it was found to be preferable that the hydrogen absorbing alloy employed as the active material for the negative electrode included mischmetal, nickel, and cobalt, as well as the dendrite cell size of the hydrogen absorbing alloy was 10μm or smaller. Also, the favorable content of neodymium in mischmetal was 20-50 weight%, and the favorable atomic ratio of cobalt to mischmetal was 0.5-1.2:1.

[Others]

The present invention is not limited to the above embodiments; for example, there are the following conceivable modifications.

(1) Although in the above embodiments, to include zinc or cadmium in the positive electrode, the solution of zinc sulfate or cadmium sulfate was poured during the preparation of the active material, they may be included by adding zinc oxide powder or cadmium oxide powder as well as by adding either of them together with the above paste.

(2) Although in the above embodiments, to include cobalt in the positive electrode, the cobalt oxide was employed; however, cobalt metal or cobalt hydroxide may be employed alone, or more than two sorts of these cobalt may be employed together.

(3) The dendrite cell size of the crystal particle of the hydrogen absorbing alloy is substantially equivalent to a dendrite arm spacing. The dendrite arm spacing is not excluded in the present invention; instead, the dimension of the crystal particle may be determined by the dendrite arm spacing.

(4) Although not described in the above embodiments, hydrophilic characteristics may be added to the separator material in the present invention according to a conventional method. For example, if the separator material is disposed in the atmosphere where fluorine gas to absorb the fluorine gas, the separator material will gain the hydrophilic characteristics.

(5) The electrolyte must be alkaline electrolyte, but its composition and alkaline concentration are not limited specifically. However, it is preferable that the electrolyte mainly includes potassium hydroxide besides the additional component of sodium hydroxide and/or lithium hydroxide; and the total concentration of these components is between 4-8 mol/l.

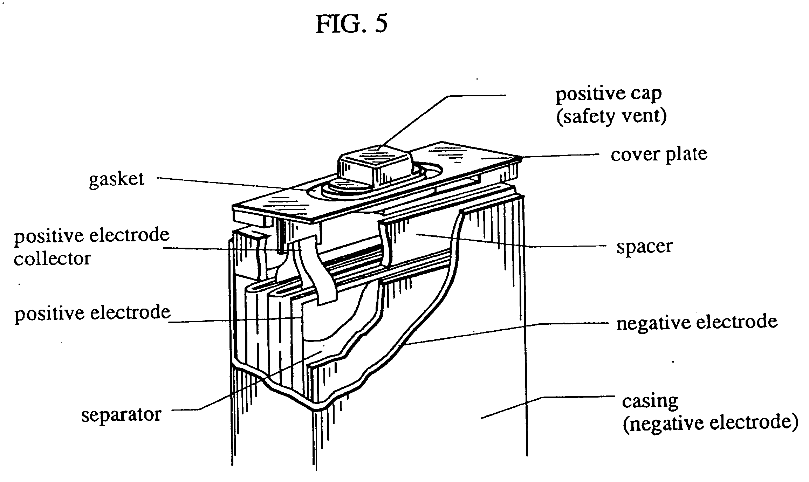

(6) The shape of the cell is not limited to cylindrical; for example, the present invention may be applied to a rectangular-shaped cell as shown in FIG. 5.

(7) The working pressure of the cell safety vent can vary. In the above examples, the working pressure of 15kgf/cm$^2$ is employed; however, the preferable working pressure is 20kgf/cm$^2$ to secure safety.

According to the prevent invention, which has been explained in the above embodiment, the discharge characteristics of the sealed type nickel-hydride storage cell improve even in the continuous charge in low and high temperature, whereby high efficiency of the sealed type nickel-metal hydride storage cell is sustained in a wide range of temperatures, from low to high. Thus, the drawbacks of the conventional sealed type nickel-metal hydride storage cell, the deterioration of the discharge characteristics during the continuous charge in low and high temperature, is overcome by the present invention. Accordingly, usability of the sealed type nickel-metal hydride cell improves by the present invention, since it can be applied to the electronic devices to which it was not applicable conventionally as the power source or memory back-up source.

**Claims**

1. A sealed nickel-metal hydride alkaline storage cell comprising:

   a positive electrode which includes nickel active material as a main component, and also includes at least one element selected from a group consisting of zinc and cadmium;
   a negative electrode mainly comprising hydrogen absorbing alloy;
   electrolyte comprising alkaline solution; and
   a separator which is mainly made of non-woven polyolefin resin fabric or non-woven polysulfone resin fabric and holds the electrolyte,
   wherein the thickness and weight per unit of the separator are 0.15-0.22mm and 60-85g/m$^2$ respectively and the amount of electrolyte held in the separator is represented by $0.3 \leq X/(X+Y) \leq 0.5$, in which X is the weight of the electrolyte held in the separator while Y is the weight of the separator material.

2. The sealed type nickel-metal hydride alkaline storage cell of claim 1, wherein the hydrogen absorbing alloy constituting the negative electrode comprises mischmetal being a rare earth element mixture, as well as nickel and cobalt, and a crystal of the hydrogen absorbing alloy has a $CaCu_5$ structure.

3. The sealed type nickel-metal hydride alkaline storage cell of claim 2, wherein the mischmetal includes neodymium which is 20-50 weight% of the total weight of the mischmetal.

4. The sealed type nickel-metal hydride alkaline storage cell of claim 2, wherein the atomic ratio of the cobalt to the mischmetal is 0.5-1.2:1.

5. The sealed type nickel-metal hydride alkaline storage cell of claim 1, wherein a dendrite cell size of a crystal particle constituting the hydrogen absorbing alloy is 10μm or smaller.

6. The sealed type nickel-metal hydride alkaline storage cell of claim 5, wherein the hydrogen absorbing alloy is obtained by cooling its molten liquid at $1\times10^3$°C/s or faster.

7. A method of producing a sealed type nickel-metal hydride alkaline storage cell comprising:

a positive electrode which includes nickel active material as a main component, and also includes at least one element selected from a group consisting of zinc and cadmium;
a negative electrode mainly comprising hydrogen absorbing alloy;
an electrolyte comprising alkaline solution; and
a separator having a thickness and weight per unit of 0.15-0.22mm and 60-85g/m² respectively which is mainly made of one of non-woven polyolefin resin fabric and non-woven polysulfone resin fabric, the method comprising the steps of:
obtaining weight of the separator Y; and
obtaining weight of electrolyte preferably held in the positive and negative electrodes, Z, and further comprising the sub-step of pouring weight of electrolyte, W, into the cell, wherein W is expressed by

$$W = \frac{Y}{1/K - 1} + Z$$

and
$0.3 \leq K \leq 0.5$.

**Patentansprüche**

1. Geschlossene alkalische Nickel/Metallhydrid-Speicherzelle mit:

einer positiven Elektrode, die ein aktives Nickelmaterial als Hauptkomponente enthält, und ferner mindestens ein Element enthält gewählt aus der Gruppe von Zink und Kadmium;

einer negativen Elektrode, die hauptsächlich eine wasserstoffabsorbierende Legierung enthält;

einem Elektrolyt mit einer alkalischen Lösung; und

einem Separator, der hauptsächlich aus nichtgewebtem Polyolefinharzstoff oder nichtgewebtem Polysulfonstoff besteht und den Elektrolyten aufnimmt,

wobei die Dicke und das Einheitsgewicht des Separators 0,15 bis 0,22 mm bzw. 60 bis 85 g/m² sind und die Elektrolytmenge, die im Separator gehalten wird, repräsentiert wird durch $0,3 \leq X/(X+Y) \leq 0,5$, wobei X das Gewicht des im Separator gehaltenen Elektrolyten ist, während Y das Gewicht des Separatormaterials ist.

2. Geschlossene alkalische Nickel/Metallhydrid-Speicherzelle nach Anspruch 1,

wobei die wasserstoffabsorbierende Legierung, welche die negative Elektrode bildet, Auer-Metall enthält, welches eine seltene Erdenmischung ist, sowie Nickel und Kobalt, und ein Kristall der wasserstoffabsorbierenden Legierung eine $CaCo_5$-Struktur aufweist.

3. Geschlossene alkalische Nickel/Metallhydrid-Speicherzelle nach Anspruch 2, dadurch **gekennzeichnet**, daß das Auer-Metall Neodym enthält, welches 20 bis 50 Gew% des Gesamtgewichts des Auer-Metalls ist.

4. Geschlossene alkalische Nickel/Metallhydrid-Speicherzelle nach Anspruch 2,

wobei das Atomverhältnis des Kobalts zum Auer-Metall 0.5 bis 1.2:1 ist.

5. Geschlossene alkalische Nickel/Metallhydrid-Speicherzelle nach Anspruch 1,

wobei die Dendrit-Zellengröße eines Kristallpartikels, welches die wasserstoffabsorbierende Legierung bildet, 10 μm oder kleiner ist.

6. Geschlossene alkalische Nickel/Metallhydrid-Speicherzelle nach Anspruch 5,

wobei die wasserstoffabsorbierende Legierung erhalten wird durch Abkühlen ihrer Schmelze mit 1 x 10³°C /sec oder schneller.

**7.** Verfahren zum Erzeugen einer geschlossenen alkalischen Nickel/Metallhydrid-Speicherzelle mit:

einer positiven Elektrode, die aktives Nickelmaterial als Hauptkomponente enthält und außerdem mindesten ein Element aus der Gruppe von Zink und Kadmium;

einer negativen Elektrode, die hauptsächlich aus einer wasserstoffabsorbierenden Legierung besteht;

einem Elektrolyten, der eine alkalische Lösung enthält; und

einem Separator, der eine Dicke und ein Einheitsgewicht von 0,5 bis 0,22 mm bzw. 60 bis 85 g/m² hat, der im wesentlichen gemacht ist aus nichtgewebtem Polyolefinharzstoff oder nichtgewebtem Polysulfonharzstoff, wobei das Verfahren die Schritte aufweist:

Gewinnen des Gewichts Y des Separators; und

Gewinnen des Gewichts Z des Elektrolyten, welcher vorzugsweise in den positiven und negativen Elektroden gehalten wird, und

ferner mit dem Unterschritt: Eingießen eines Gewichts W von Elektrolyt in die Zelle, wobei W ausgedrückt wird durch

$$W = \frac{Y}{1/K - 1} + Z$$

und
$$0,3 \leq K \leq 0,5.$$

**Revendications**

**1.** Accumulateur scellé alcalin de nickel-hydrure de métal comprenant :

une électrode positive qui comprend un matériau actif de nickel en tant que composant principal, et qui comprend également au moins un élément choisi à partir du groupe constitué du zinc et du cadmium ;
une électrode négative comprenant principalement un alliage absorbant l'hydrogène ;
un électrolyte comprenant une solution alcaline ; et
un séparateur qui est principalement réalisé en une étoffe non tissée de résine polyoléfine ou en une étoffe non tissée de résine polysulfone, et qui retient l'électrolyte,
dans lequel l'épaisseur et le poids par unité du séparateur sont de 0,15-0,22 mm et 60-85 gr/m² respectivement, et la quantité d'électrolyte retenue dans le séparateur est représentée par la formule $0,3 \leq X / (X + Y) \leq 0,5$, dans laquelle X est le poids de l'électrolyte retenu dans le séparateur alors que Y est le poids du matériau de séparateur.

**2.** Accumulateur scellé alcalin de nickel-hydrure de métal selon la revendication 1, dans lequel l'alliage absorbant l'hydrogène constituant l'électrode négative comprend un mischmétal qui est un mélange d'éléments de terres rares, ainsi que du nickel et du cobalt, et un cristal de l'alliage absorbant l'hydrogène à une structure $CaCu_5$.

**3.** Accumulateur scellé alcalin de nickel-hydrure de métal selon la revendication 2, dans lequel le mischmétal comprend du néodyme qui représente 20-50 % en poids du poids total du mischmétal.

**4.** Accumulateur scellé alcalin de nickel-hydrure de métal selon la revendication 2, dans lequel le rapport atomique du cobalt au mischmétal est de 0,5-1,2:1.

**5.** Accumulateur scellé alcalin de nickel-hydrure de métal selon la revendication 1, dans lequel une longueur de cellule dendritique d'une particule de cristal constituant l'alliage absorbant l'hydrogène est de 10 μm ou inférieure.

**6.** Accumulateur scellé alcalin de nickel-hydrure de métal selon la revendication 5, dans lequel l'alliage absorbant l'hydrogène est obtenu en refroidissant son liquide fondu à 1 x 10³°C/s ou plus rapidement.

**7.** Procédé de fabrication d'un accumulateur scellé alcalin de nickel-hydrure de métal comprenant :

une électrode positive qui comprend un matériau actif de nickel en tant que composant principal, et qui comprend aussi au moins un élément choisi à partir d'un groupe constitué du zinc et du cadmium ;
une électrode négative comprenant principalement un alliage absorbant l'hydrogène ;
un électrolyte comprenant une solution alcaline ; et
un séparateur ayant une épaisseur et un poids par unité de 0,15-0,22 mm et 60-85 gr/m² respectivement, qui est principalement réalisé en une étoffe non tissée de résine polyoléfine ou une étoffe non tissée de résine polysulfone,

le procédé comprenant les étapes de :

obtenir le poids du séparateur Y ; et

obtenir le poids d'un électrolyte retenu de préférence dans les électrodes positive et négative, Z, et

comprenant en outre la sous-étape de couler un poids d'électrolyte, W, dans l'accumulateur, dans lequel W est exprimé par la formule :

$$W = \frac{Y}{1/K - 1} + Z$$

et $0,3 \leq K \leq 0,5$.

FIG. 1

FIG. 2

## FIG. 3

## FIG. 4

FIG. 5

separator

positive electrode

positive electrode collector

gasket

positive cap (safety vent)

cover plate

spacer

negative electrode

casing (negative electrode)

## FIG. 6

measured length

cell border

## Table 1

| cell | X/(X+Y) | low-temperature continuous charge cycle life (cycles) | | | high-temperature continuous charge cycle life (cycles) | | |
|---|---|---|---|---|---|---|---|
| | | AA | 4/5A | A | AA | 4/5A | A |
| A1 | 0.30 | 10 | 12 or more | 11 | 12 or more | 12 or more | 12 or more |
| A2 | 0.35 | 12 or more | 12 or more | 12 or more | 12 or more | 12 or more | 12 or more |
| A3 | 0.40 | 12 or more | 12 or more | 12 or more | 12 or more | 12 or more | 12 or more |
| A4 | 0.45 | 12 or more | 12 or more | 12 or more | 12 or more | 12 or more | 12 or more |
| A5 | 0.50 | 12 or more | 12 or more | 12 or more | 12 or more | 12 or more | 12 or more |
| D1 | 0.20 | 1 | 1 | 1 | 5 | 5 | 7 |
| D2 | 0.25 | 3 | 3 | 3 | 7 | 8 | 9 |
| D3 | 0.55 | 1 | 2 | 1 | 8 | 5 | 11 |
| D4 | 0.60 | 1 | 1 | 1 | 5 | 2 | 9 |

Table 2

| cell | cycle life (cycles) | cell | cycle life (cycles) |
|------|---------------------|------|---------------------|
| A3   | 12 or more          | J    | 12 or more          |
| G    | 7                   | K    | 12 or more          |
| H    | 3                   | L    | 6                   |
| I    | 10                  | M    | 9                   |